# EUROPEAN PATENT APPLICATION

(11) **EP 4 804 583 A1**
(43) Date of publication of application: **09.09.2026**
(21) Application number: 23957285.2
(22) Date of filing: 02.11.2023
(51) Int. Cl.: H04W 12/08, H04W 88/08

(54) **METHOD AND APPARATUS FOR UPDATING AUTHORIZATION STATE OF MOBILE IAB NODE**

(71) Applicant: 1FINITY INC., Kawasaki-shi, Kanagawa 211-8588 (JP)
(72) Inventor: YI, Su, Beijing 100022 (CN); LI, Guorong, Beijing 100022 (CN); JIA, Meiyi, Beijing 100022 (CN)
(74) Representative: Haseltine Lake Kempner LLP
(86) International application number: PCT/CN2023/129445
(87) International publication number: WO 2025/091416

(57) **Abstract**

Embodiments of the present disclosure provide a method and an apparatus for updating an authorization status of a mobile IAB-node, the method comprising that: a first node receives an XnAP message transmitted by a second node; and the first node determines, according to the XnAP message, whether the second node has completed handover of a terminal equipment served by an unauthorized mobile IAB-node and/or release of an Fl interface towards an unauthorized mobile IAB-node.

## Description

### TECHNICAL FIELD

The present disclosure relates to the field of communications.

### BACKGROUND

Integrated access and backhaul (IAB) implements a radio relay function in a next generation radio access network (NG-RAN). This relay node is called an IAB-node, and supports both access and backhaul (BH) simultaneously via 5G new radio (NR). All IAB-nodes are connected to one IAB-donor node via one or more hops. These multi-hop connections form a Directed Acyclic Graph (DAG) topological structure which takes the IAB-donor node as a root node. The IAB-donor node is responsible for performing centralized resource management, topology management and routing management in an IAB network topology.

The IAB-node supports functions of a gNB-DU (distributed unit) which is called an IAB-DU, and may serve ordinary user equipments (UEs) and IAB child nodes. The IAB-node simultaneously supports some functions of a UE and may be called an IAB-mobile termination (MT). The IAB-MT may support functions of a UE, e.g. functions of a UE physical layer, an access stratum (AS), radio resource control (RRC) and non-access stratum (NAS), and may be connected to an IAB parent node. A terminating node at a network side is called an IAB-donor, which provides network access for an IAB-MT or a UE via a backhaul or access link. The IAB-donor is further divided into an IAB-donor-CU (central unit) and an IAB-donor-DU. The IAB-DU and the IAB-donor-CU are connected via an F1 interface. In a standalone networking scenario, a gNB and an IAB-donor-CU are connected via an Xn interface.

To support multi-hop routing / forwarding of a packet, IAB introduces a Backhaul Adaptation Protocol (BAP) sublayer. The BAP sublayer is located above a radio link control (RLC) sublayer and below an Internet Protocol (IP) layer, and supports functions such as selection of a packet destination node and a path, routing / forwarding of a packet, bearer mapping, flow control feedback, and backhaul link failure notification, etc.

In a multi-hop scenario, in order to achieve relay forwarding of a packet, the IAB-node needs to determine a destination node to which the packet arrives, and then determines a next-hop node corresponding to the destination node according to a routing table and transmits the packet. In the above scenarios, an IAB-donor-CU (called a donor-CU or a CU or a gNB-CU for short), via F1 application protocol (F1AP) signaling, configures the IAB-node with mapping from each F1 user plane (F1-U) tunnel, each non-UE-associated F1AP message, each UE-associated F1AP message and each non-F1 data (traffic) for uplink transmission initiated by the IAB-node to a BAP routing identity. IAB-node determines BAP routing identities corresponding to different types of uplink IP packets initiated from the IAB-node according to routing identity mapping information, and encapsulates BAP subheaders including BAP routing identity information for these uplink IP packets. The IAB-donor-CU configures an IAB-donor-DU (called a donor-DU for short) with mapping from different types of downlink packets to a BAP routing identity via F1AP signaling. The IAB-donor-DU determines BAP routing identities corresponding to received downlink IP packets according to routing identity mapping information, and encapsulates BAP subheaders including BAP routing identity information for these downlink IP packets.

The BAP routing identity includes a destination BAP address and a path identity from the IAB-node to the IAB-donor-DU. The BAP address is also called a DESTINATION in a BAP header. Each IAB-node and IAB-donor-DU are configured with a BAP address.

Mobile IAB (mIAB) node, also called a Mobile Base Station Relay (MBSR), uses an IAB architecture, and operates as a mobile IAB-node when being integrated into a serving Public Land Mobile Network (PLMN).

For a mobile IAB-node, subscription information stored in a Home PLMN (HPLMN) indicates whether it is authorized to operate as a mobile IAB-node, as well as corresponding locations and time periods. When a mobile IAB-node (mIAB-MT) performs initial registration with a serving PLMN, it indicates a request for serving as a mobile IAB-node. Access and Mobility Management Function (AMF) authorizes a mobile IAB-node based on the subscription information, and provides a mobile IAB authorization indication to the mobile IAB-node via NAS, as well as to an NG-RAN via an NG Application Protocol (NGAP). When receiving an authorization indication (being authorized), the mobile IAB-node uses configuration information for mobile IAB operations to establish a connection with an Operation Administration and Maintenance (OAM) system.

It should be noted that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in Background of the present disclosure.

### SUMMARY

Inventors find that mobility of a mobile IAB-node or a mobile relay in a larger area faces a challenge, that is, when it is moving, due to position change(s) or time constraint(s), an authorization status of the mobile IAB-node may often change, thereby causing a behavior of the mobile IAB-node to change too. For example, when the authorization status is changed to "not authorized", the mobile IAB-node needs to perform relevant operations to ensure not serving for any UE. Conversely, when the authorization status is changed to "authorized", the mobile IAB-node needs to perform relevant operations to implement a function of serving a UE. However, currently, a process, a behavior, etc., when the authorization status of the mobile IAB-node changes, are not defined, thus it is unable to support the mobile IAB-node to operate correctly in a case that the authorization status changes.

For at least one of the above problems or similar problems or similar problems in other scenarios, embodiments of the present disclosure provide a method and an apparatus for updating an authorization status of a mobile IAB-node.

According to an aspect of embodiments of the present disclosure, an apparatus for updating an authorization status of a mobile IAB-node is provided, configured in a first node, wherein the apparatus includes:
a first receiving unit configured to receive an XnAP message transmitted by a second node; and
a processing unit configured to determine, according to the XnAP message, whether the second node has completed handover of a terminal equipment served by an unauthorized mobile IAB-node and/or release of an F1 interface towards an unauthorized mobile IAB-node.

According to another aspect of embodiments of the present disclosure, an apparatus for updating an authorization status of a mobile IAB-node is provided, configured in a first node, wherein the apparatus includes:
a receiving unit configured to receive a first NGAP message transmitted by an AMF; and
a processing unit configured to establish a backhaul resource for a mobile IAB-node in a case where the first NGAP message includes an authorization status with a value being "authorized" of the mobile IAB-node, so that the mobile IAB-node establishes F1 connection with a second node by using the backhaul resource.

According to another aspect of embodiments of the present disclosure, an apparatus for updating an authorization status of a mobile IAB-node is provided, configured in a mobile IAB-node, wherein the apparatus includes:
a transmitting unit configured to transmit a new authorization indication to an AS layer when a UE Configuration Update Command transmitted by an AMF is received and the UE Configuration Update Command includes an IAB authorization status with a value being "authorized".

According to a further aspect of embodiments of the present disclosure, an apparatus for supporting a broadcast message of a mobile IAB-node is provided, configured in a parent node of the mobile IAB-node, wherein the apparatus includes:
a transmitting unit configured to transmit an SIB1 broadcast message, the SIB1 broadcast message including cell identity information, and the SIB1 broadcast message including a mobileIAB-Support field and a gNB-ID-Length field, the gNB-ID-Length field being optional;
wherein when the mobileIAB-Support field in the SIB1 broadcast message is present, the gNB-ID-Length field in the SIB1 broadcast message must also be present.

One of advantageous effects of embodiments of the present disclosure lies in that according to embodiments of the present disclosure, an authorization problem of a mobile IAB-node is solved, particularly in a case where an mIAB-MT and a collocated mIAB-DU are connected to different donor-CUs.

Referring to later descriptions and drawings, specific implementations of the present disclosure are disclosed in detail, indicating modes in which principles of the present disclosure may be adopted. It should be understood that implementations of the present disclosure are not limited in terms of a scope. Within scopes of spirits and terms of attached claims, implementations of the present disclosure include many changes, modifications, and equivalents.

Features described and/or illustrated for one implementation may be used in the same way or in a similar way in one or more other implementations, and be combined with features in other implementations or replace features in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings and may be used to indicate corresponding components used in more than one implementation.

Included drawings are used to provide further understanding on embodiments of the present disclosure, constitute a part of the Specification, are used to illustrate implementations of the present disclosure, and expound principles of the present disclosure together with text descriptions. Obviously, drawings in the following descriptions are only some embodiments of the present disclosure. Persons skilled in the art may further obtain other drawings according to these drawings under the premise that persons skilled in the art do not pay inventive labor. In the drawings:
FIG. 1 is a schematic diagram of one example of an IAB network topology structure;
FIG. 2 is a schematic diagram of a method for updating an authorization status of a mobile IAB-node in embodiments of the present disclosure;
FIG. 3 is a schematic diagram of another example of an IAB network topology structure;
FIG. 4 is a schematic diagram of a method for updating an authorization status of a mobile IAB-node in embodiments of the present disclosure;
FIG. 5 is a schematic diagram of a method for updating an authorization status of a mobile IAB-node in embodiments of the present disclosure;
FIG. 6 is a schematic diagram of a method for supporting a broadcast message of a mobile IAB-node in embodiments of the present disclosure;
FIG. 7 is a schematic diagram of an apparatus for updating an authorization status of a mobile IAB-node in embodiments of the present disclosure;
FIG. 8 is another schematic diagram of an apparatus for updating an authorization status of a mobile IAB-node in embodiments of the present disclosure;
FIG. 9 is another schematic diagram of an apparatus for updating an authorization status of a mobile IAB-node in embodiments of the present disclosure;
FIG. 10 is a schematic diagram of a method for supporting a broadcast message of a mobile IAB-node in embodiments of the present disclosure;
FIG. 11 is a schematic diagram of an IAB-donor node in embodiments of the present disclosure;
FIG. 12 is a schematic diagram of an IAB-node in embodiments of the present disclosure.

### DETAILED DESCRIPTION

Referring to the drawings, through the following Specification, the aforementioned and other features in the present disclosure will become obvious. Specification and the drawings specifically disclose specific implementations of the present disclosure, indicating partial implementations in which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of terms listed in an associated manner. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, term "communication network" or "radio communication network" may refer to a network meeting any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol at any stage, which for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in future.

In embodiments of the present disclosure, term "network device" e.g. refers to a device accessing a terminal equipment to a communication network in a communication system and providing services to the terminal equipment. Network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB), a NG-RAN node, and an IAB-donor, etc., and may further include a Remote Radio Head (RRH), a Remote Radio Unit (RRU), a relay or a low power node (such as femto, pico, etc.). And term "base station" may include some or all functions thereof, and each base station may provide communication coverage to a specific geographic region. Term "cell" may refer to a base station and/or a coverage area thereof, which depends on a context in which this term is used.

In embodiments of the present disclosure, term "User Equipment (UE)" e.g. refers to a device accessing a communication network and receiving network services via a network device, or may also be called "Terminal Equipment (TE)". Terminal equipment may be fixed or mobile, and may also be called a Mobile Station (MS), a terminal, a user, a Subscriber Station (SS), an Access Terminal (AT), a station and so on.

The terminal equipment may include but be not limited to the following devices: a Cellular Phone, a Personal Digital Assistant (PDA), a wireless modem, a wireless communication device, a handheld device, a machine type communication device, a laptop computer, a cordless phone, a smart phone, a smart watch, a digital camera, or may be an IAB-MT, and so on.

For another example, under a scenario such as Internet of Things (IoT), a terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

In 3GPP TS 23.501 protocol, an AMF may notify a mobile IAB-node (mIAB-MT) about authorization status information of the mobile IAB-node itself. The notification is implemented via NAS signaling. If the mobile IAB-node is not authorized, an AMF may indicate to the mobile-IAB node (mIAB-MT) that it is not allowed to operate as a mobile IAB-node by using a mobile IAB authorization indication (not authorized) through registration procedures. In this situation, an AMF further provides the mobile IAB authorization indication (not authorized) to a donor-gNB (IAB-donor).

Inventors find that based on needs for network coverage and QoS support, an F1-terminating donor and a non-F1-terminating donor of the IAB-node may be different, i.e., an MT and a DU of the IAB-node may be terminated to different IAB-donor-CUs.

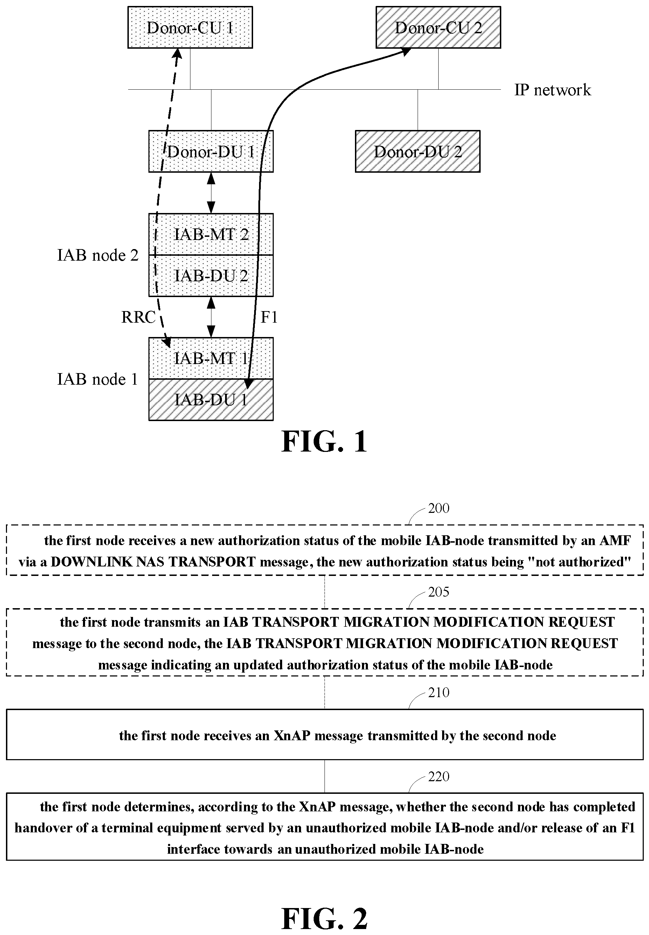

FIG. 1 is a schematic diagram of one example of an IAB network topology structure, showing a situation in which an MT and a DU of a mIAB node (IAB-node 1 in FIG. 1) are terminated to different donor-CUs.

F1-terminating node refers to a donor-CU that terminates an F1 interface towards an IAB-node, such as donor-CU2 shown in FIG. 1, and in FIG. 1, if IAB-DU1 is terminated to donor-CU2 via an F1 connection, donor-CU2 is an F1-terminating node of IAB-node 1. F1-terminating donor-CU may also be called a donor-CU of an IAB-DU, because the IAB-DU is configured by this CU.

In addition, non-F1-terminating node refers to a CU that does not terminate an F1 interface towards an IAB-node and has a donor function, such as donor-CU1 shown in FIG. 1. Since an RRC connection exists between the non-F1-terminating node and an IAB-MT have, the non-F1-terminating node may also be called a donor node which serves an IAB-MT, and the non-F1-terminating donor CU is also called a donor CU of an IAB-MT or may also be called an RRC-terminating donor-CU of an IAB-node.

In FIG. 1, IAB-MT1 is singly connected to parent node IAB-node 2, then is connected to donor-DU1 and donor-CU1. IAB-DU1 establishes an F1 connection with donor-CU2, but a path traversed by this F1 connection finally reaches donor-CU2 through IAB node 2 and donor-DU1.

In embodiments of the present disclosure, by taking 5G multi-hop IAB network deployment as an example, a plurality of UEs are connected to an IAB-donor via IAB-nodes of multiple hops and finally access a 5G network. An IAB-node connected to UEs is mobile. In a case where an MT and a DU of a mobile IAB-node are connected to different IAB-donor-CUs, when an authorization status of an mIAB-MT changes, how each node in an IAB network operates to implement correct configuration and operation of a mobile IAB-node is regarded to.

In embodiments of the present disclosure, by taking a mobile IAB-node as an example for description, however the present disclosure is not limited thereto. All embodiments of the present disclosure are also applicable to ordinary IAB-nodes (non-mobile IAB-nodes), that is, descriptions in each of the following embodiments are also applicable to ordinary IAB-nodes. For ordinary IAB-nodes, "authorization status information" in the following descriptions refers to IAB Authorization Status, and other descriptions are the same as those for a mobile IAB-node.

Various implementations of the present disclosure are described below with reference to the drawings. These implementations are only exemplary and are not limitations on the present disclosure. In the following descriptions, "if...", "in a case where..." and "when...", etc. have the same meaning, and are interchangeable.

### Embodiments of a First Aspect

Embodiments of the present disclosure provide a method for updating an authorization status of a mobile IAB-node, which is described from a side of a first node, the first node being an RRC-terminating node (RRC-terminating IAB-donor) of the mobile IAB-node, an F1-terminating node (F1-terminating IAB-donor) of the mobile IAB-node is called a second node. By taking that the mobile IAB-node is IAB-node 1 in a scenario shown in FIG. 1 as an example, the first node is Donor-CU1 in a scenario shown in FIG. 1, called CU1 for short, and the second node is Donor-CU2 in a scenario shown in FIG. 1, called CU2 for short.

FIG. 2 is a schematic diagram of the method for updating an authorization status of a mobile IAB-node in embodiments of the present disclosure. As shown in FIG. 2, the method includes:
210: the first node receives an XnAP message transmitted by the second node; and
220: the first node determines, according to the XnAP message, whether the second node has completed handover of a terminal equipment served by an unauthorized mobile IAB-node and/or release of an F1 interface towards an unauthorized mobile IAB-node.

It is worth noting that the above FIG. 2 only schematically describes embodiments of the present disclosure, however the present disclosure is not limited thereto. For example, an execution sequence of operations may be adjusted appropriately, moreover some other operations may be added or certain operations therein may be reduced. Persons skilled in the art may make appropriate modifications according to the above contents, not being limited to records in the above FIG. 2.

In the above embodiments, when an mIAB-MT and a collocated mIAB-DU of a mobile IAB-node are connected to different IAB-donor-CUs, i.e., when an RRC-terminating IAB-donor and an F1-terminating IAB-donor are different, the RRC-terminating IAB-donor will notify the F1-terminating IAB-donor about an authorization status of the mobile IAB-node via XnAP signaling when the authorization status of the mobile IAB-node is updated. If the authorization status is updated to "not authorized", the F1-terminating IAB-donor needs to perform handover for a terminal equipment served by the mobile IAB-node and/or release an F1 interface towards the mobile IAB-node.

According to the above embodiments, the F1-terminating IAB-donor (second node) transmits an XnAP message to the RRC-terminating IAB-donor (first node) to enable the RRC-terminating IAB-donor (CU1) to determine whether it has completed handover of a terminal equipment served by the mobile IAB-node and/or release of an F1 interface towards the mobile IAB-node, thereby reducing or avoiding UE service interruption. Thus, a problem where an authorization status of a mobile IAB-node changes is solved to a certain extent, thereby supporting configuration flexibility of a mobile IAB-node, supporting movement of a mobile IAB-node over wide areas, and being able to provide high-quality services for a UE served by a mobile IAB-node.

In the above embodiments, XnAP message is a message transferred on an Xn interface. In a scenario shown in FIG. 1, an interface between donor-CU1 and donor-CU2 is an Xn interface, and a control message transferred between the two is called an XnAP message.

In some embodiments, the XnAP message is an IAB TRANSPORT MIGRATION MODIFICATION RESPONSE message, the IAB TRANSPORT MIGRATION MODIFICATION RESPONSE message being a reply message for an IAB TRANSPORT MIGRATION MODIFICATION REQUEST message transmitted by the first node to the second node, and the IAB TRANSPORT MIGRATION MODIFICATION REQUEST message including an IE *Mobile IAB Authorization Status*, a value of the IE being "not authorized".

The IAB TRANSPORT MIGRATION MODIFICATION REQUEST message is the first message in an IAB transport migration modification procedure initiated by the first node. The IAB transport migration modification procedure is a UE-associated procedure (a mobile IAB-MT serves as a UE), a UE XnAP ID is included in the IAB TRANSPORT MIGRATION MODIFICATION REQUEST and RESPONSE messages, indicating an identity of a mobile IAB-node.

In the above embodiments, an existing IAB TRANSPORT MIGRATION MODIFICATION RESPONSE message is reused to perform implicit indication, and a behavior of the first node (NG-RAN node) when receiving the IAB TRANSPORT MIGRATION MODIFICATION RESPONSE message is enhanced.

For example, if the IAB TRANSPORT MIGRATION MODIFICATION RESPONSE message received by the first node is a reply message for the IAB TRANSPORT MIGRATION MODIFICATION REQUEST message with the IE *Mobile IAB Authorization Status* whose value is "Not Authorized", it is considered that the second node has completed handover of a terminal equipment served by the unauthorized mobile IAB-node and/or release of an F1 interface towards the unauthorized mobile IAB-node. Thus, the first node may perform subsequent actions.

According to the above embodiments, by reusing the IAB TRANSPORT MIGRATION MODIFICATION RESPONSE message to perform implicit indication, signaling is saved, implementation is easier, and forward compatibility is better.

In some other embodiments, the XnAP message is an IAB TRANSPORT MIGRATION MODIFICATION RESPONSE message, the IAB TRANSPORT MIGRATION MODIFICATION RESPONSE message including a first IE, the first IE indicating that it is confirmed that an authorization status of a mobile IAB-node being changed to "not authorized" is received, and the first IE indicating that handover of a terminal equipment served by the unauthorized mobile IAB-node and/or release of an F1 interface towards the unauthorized mobile IAB-node has/have been completed.

In the above embodiments, a new IE (called the first IE) is added in the existing IAB TRANSPORT MIGRATION MODIFICATION RESPONSE message to perform explicit indication, and a behavior of the first node (NG-RAN node) when receiving the IAB TRANSPORT MIGRATION MODIFICATION RESPONSE message is enhanced.

For example, if the IAB TRANSPORT MIGRATION MODIFICATION RESPONSE message received by the first node includes the first IE, it is considered that the second node has completed handover of a terminal equipment served by the unauthorized mobile IAB-node and/or release of an F1 interface towards the unauthorized mobile IAB-node. Thus, the first node may perform subsequent actions.

In the above embodiments, naming of the first IE is not limited; for example, it may be called an *IAB Release* IE. The first IE indicates that the second node confirmed that an authorization status of a mobile IAB-node being changed to "not authorized" is received, and notifies the first node that handover of a UE served by the mobile IAB-node and/or release of an F1 interface towards the mobile IAB-node (mIAB-DU) is/are completed.

According to the above embodiments, by adding the first IE in the IAB TRANSPORT MIGRATION MODIFICATION RESPONSE message to perform explicit indication, indication is more clear and a fault tolerance rate is stronger in implementation.

In some further embodiments, the XnAP message is an IAB TRANSPORT MIGRATION MANAGEMENT REQUEST message, the IAB TRANSPORT MIGRATION MANAGEMENT REQUEST message including a second IE, the second IE indicating that handover of a terminal equipment served by the unauthorized mobile IAB-node and/or release of an F1 interface towards the unauthorized mobile IAB-node has/have been completed.

The IAB TRANSPORT MIGRATION MANAGEMENT REQUEST message is the first message in an IAB transport migration management procedure initiated by the second node. The IAB transport migration management procedure is a UE-associated procedure (a mobile IAB-MT serves as a UE), a UE XnAP ID is included in the IAB TRANSPORT MIGRATION MANAGEMENT REQUEST and RESPONSE messages, indicating an identity of a mobile IAB-node. In addition, in an mIAB-DU migration procedure, a BAP address is used as an identity of an mIAB-node in the first IAB TRANSPORT MIGRATION MANAGEMENT REQUEST message.

In the above embodiments, since a second node requires a period of time to perform processes such as (one or more) UE handovers and F1 release, if the IAB TRANSPORT MIGRATION MODIFICATION RESPONSE message is used to reply to the first node regarding change of an authorization status of a mobile IAB-node after these processes are completed, it may cause an IAB Transport Migration Modification procedure to take too long, possibly leading to procedure expiry and thus resulting in procedure failure. According to the above embodiments, by using a procedure initiated by the second node to perform the above notification, the above problem is avoided.

In the above embodiments, an IAB Transport Migration Management procedure in an XnAP procedure may be enhanced. For example, the second IE is added in the IAB TRANSPORT MIGRATION MANAGEMENT REQUEST message. The second IE indicates that a sender has completed handover of a UE served by the mobile IAB-node and/or release of an F1 interface towards a mobile IAB-node (mIAB-DU). The present disclosure imposes no limitation on naming of the second IE, for example, it may be called an *IAB Resource Release* IE.

In the above embodiments, the above procedure may be performed after the second node completes the handover of the UE served by the mobile IAB-node and/or the release of the F1 interface towards the mobile IAB-node. However, the present disclosure is not limited thereto, the above procedure may also be performed at a timing deemed appropriate by the second node.

In the above embodiments, a behavior of the first node (NG-RAN node) when receiving the IAB TRANSPORT MIGRATION MANAGEMENT REQUEST message may further be enhanced. For example, when the first node receives the IAB TRANSPORT MIGRATION MANAGEMENT REQUEST message, if the IAB TRANSPORT MIGRATION MANAGEMENT REQUEST message includes the second IE, the first node confirms that the second node has completed handover of a terminal equipment served by an unauthorized mobile IAB-node and/or release of an F1 interface towards an unauthorized mobile IAB-node, and the first node may perform subsequent actions.

In the above embodiments, optionally, the second IE may be included in a *Traffic To Be Released Information* IE group, or in a *Full Release* IE under a *Traffic To Be Released Information* IE group, etc., the present disclosure does not impose limitations thereto.

In the above embodiments, optionally, when the second IE is present, All *traffic indication* IEs are set to "true", indicating that the second node requests to release all traffic related to the mobile IAB-node, offloaded to a topology of the first node.

According to the above embodiments, by enhancing an IAB transport migration management procedure in an XnAP procedure, procedure expiry or failure caused by too long waiting time is avoided, and network performance is improved.

In some further embodiments, the XnAP message is a message in a class 2 procedure initiated by the second node, the message including a third IE, the third IE indicating that handover of a terminal equipment served by an unauthorized mobile IAB-node and/or release of an F1 interface towards an unauthorized mobile IAB-node has/have been completed.

In the above embodiments, notification is performed using a class 2 procedure (unidirectional message procedure) initiated by the second node (F1-terminating IAB-donor). A new procedure may be used, a new UE-associated message may be defined, the message including a third IE, or an existing message may be enhanced, for example the third IE is added in an ACTIVITY NOTIFICATION message. The present disclosure does not impose limitations on naming and a location, etc. of a third IE.

In the above embodiments, when receiving the message including the third IE, the first node (NG-RAN node) may, according to the third IE, confirm that the second node has completed handover of a terminal equipment served by an unauthorized mobile IAB-node and/or release of an F1 interface towards an unauthorized mobile IAB-node, and the first node may perform subsequent actions.

According to the above embodiments, by using a unidirectional message procedure initiated by a second node to perform the above notification, signaling is less, and implementation is easier.

In some further embodiments, the XnAP message is a message in a non-UE-associated procedure initiated by the second node, the message including a fourth IE, the fourth IE indicating that handover of a terminal equipment served by an unauthorized mobile IAB-node and/or release of an F1 interface towards an unauthorized mobile IAB-node has/have been completed.

In the above embodiments, notification is performed using a non-UE associated procedure initiated by the second node (F1-terminating IAB-donor). The non-UE associated procedure may not be specific for a particular UE. Thus, identities of one or more mobile IAB-nodes may be included in a procedure message, thereby changes of authorization statuses of multiple mobile IAB-nodes may be confirmed simultaneously, and notifying a first node about information on UE handover and/or F1 release of multiple mobile IAB-nodes.

In the above embodiments, the message may be a new message in the non-UE associated procedure, or may be an NG-RAN NODE CONFIGURATION UPDATE message in the non-UE associated procedure.

For example, a new class 1 procedure is used, and a new message is defined, in an initiated message (e.g., a request message), the fourth IE and identities of one or more mobile IAB-nodes, such as a BAP address, are included.

For another example, a message in an existing non-UE associated procedure may be enhanced, for example the fourth IE is added in an NG-RAN NODE CONFIGURATION UPDATE message.

The present disclosure does not impose limitations on naming and a location, etc. of the fourth IE.

In the above embodiments, when receiving a message with the fourth IE, the first node (NG-RAN node) may confirm that the second node has completed handover of terminal equipments served by unauthorized mobile IAB-nodes corresponding to one or more node identities in the message and/or release of F1 interfaces towards unauthorized mobile IAB-nodes corresponding to one or more node identities in the message, the first node may then perform subsequent actions.

According to the above embodiments, by using a non-UE associated procedure initiated by the second node to perform the notification, authorization status updates of multiple mobile IAB-nodes may be simultaneously supported, which makes implementation more efficient.

According to methods in each of the above embodiments, the first node determines, according to an XnAP message from the second node, whether the second node has completed handover of a terminal equipment served by an unauthorized mobile IAB-node and/or release of an F1 interface towards an unauthorized mobile IAB-node. After confirming that the second node has completed handover of a terminal equipment served by an unauthorized mobile IAB-node and/or release of an F1 interface towards an unauthorized mobile IAB-node, for example, after receiving the IAB TRANSPORT MIGRATION MODIFICATION RESPONSE message, or after receiving the IAB TRANSPORT MIGRATION MODIFICATION RESPONSE message containing the first IE, or after receiving the IAB TRANSPORT MIGRATION MANAGEMENT REQUEST message containing the second IE, or after receiving the message in a class 2 procedure containing the third IE, or after receiving the message in a non-UE associated procedure containing the fourth IE, the first node may perform subsequent actions.

For example, the first node may release all traffics offloaded from a topology of the second node for the unauthorized mobile IAB-node and/or release a backhaul resource of the unauthorized mobile IAB-node. The backhaul resource here includes, for example, a BAP address, a TNL address (i.e., IP address), a BH RLC channel configuration, a default BAP configuration, and so on. The default BAP configuration, also called default uplink mapping, includes a default uplink BAP routing identity, a default uplink BH RLC channel identity, and so on. For details, relevant technologies may be referred to.

In the above examples, the first node may further release a UE XnAP ID assigned for a mobile IAB-MT.

Since an authorization status may change frequently depending on a position and time during movement of a mobile IAB-node, the first node may also choose not to release a backhaul resource of the unauthorized mobile IAB-node, so that when the authorization status changes, a saved backhaul resource may be directly used to quickly establish a DU, thereby serving a UE.

Or, the first node may also use a timer (called a first timer) to decide to retain for a period of time, and release the backhaul resource when the authorization status does not change. For example, the first timer is started when the authorization status of a mobile IAB-node is changed to "not authorized", and the first timer is stopped if the authorization status is changed to "authorized". When the first timer expires, all backhaul resources of the mobile IAB-node are released.

In the above examples, no restrictions are imposed on a value of the first timer, a value of the first timer may, for example, be in hours or in other time units.

In some embodiments, as shown in FIG. 2, the method may further include:
200: the first node receives a new authorization status of the mobile IAB-node transmitted by an AMF via a DOWNLINK NAS TRANSPORT message, the new authorization status being "not authorized"; and
205: the first node transmits an IAB TRANSPORT MIGRATION MODIFICATION REQUEST message to the second node, the IAB TRANSPORT MIGRATION MODIFICATION REQUEST message indicating an updated authorization status of the mobile IAB-node.

In the above embodiments, an AMF of a core network (5GC) notifies an NG-RAN node (a donor-CU of an mIAB-MT, i.e., donor-CU1, also i.e., the first node) of a new authorization status (i.e., "not authorized") via a DOWNLINK NAS TRANSPORT message. The DOWNLINK NAS TRANSPORT message may further carry a NAS message of an IAB-MT, which is transparently transmitted to a mobile IAB-node via donor-CU1 (the first node), to inform the mobile IAB-node of the authorization status and other information.

In the above embodiments, the RRC-terminating donor-CU (i.e., the first node) of the mobile IAB-node transmits an IAB TRANSPORT MIGRATION MODIFICATION REQUEST message to the F1-terminating donor-CU (i.e., the second node) of the mobile IAB-node, the message containing an updated authorization status of the mobile IAB-node.

In the above embodiments, the F1-terminating donor-CU (i.e., the second node) of the mobile IAB-node may hand over all UEs served by the mobile IAB-node to other cells, and the F1-terminating donor-CU (i.e., the second node) of the mobile IAB-node may release the F1 interface towards the mIAB-DU of the mobile IAB-node via an F1 removal procedure.

In the above embodiments, the XnAP message in operation 210 is the IAB TRANSPORT MIGRATION MODIFICATION RESPONSE message, may carry the first IE or may not carry the first IE. According to the IAB TRANSPORT MIGRATION MODIFICATION RESPONSE message, the first node may determine whether the second node has completed handover of a terminal equipment served by an unauthorized mobile IAB-node and/or release of an F1 interface towards an unauthorized mobile IAB-node, and proceed with subsequent actions.

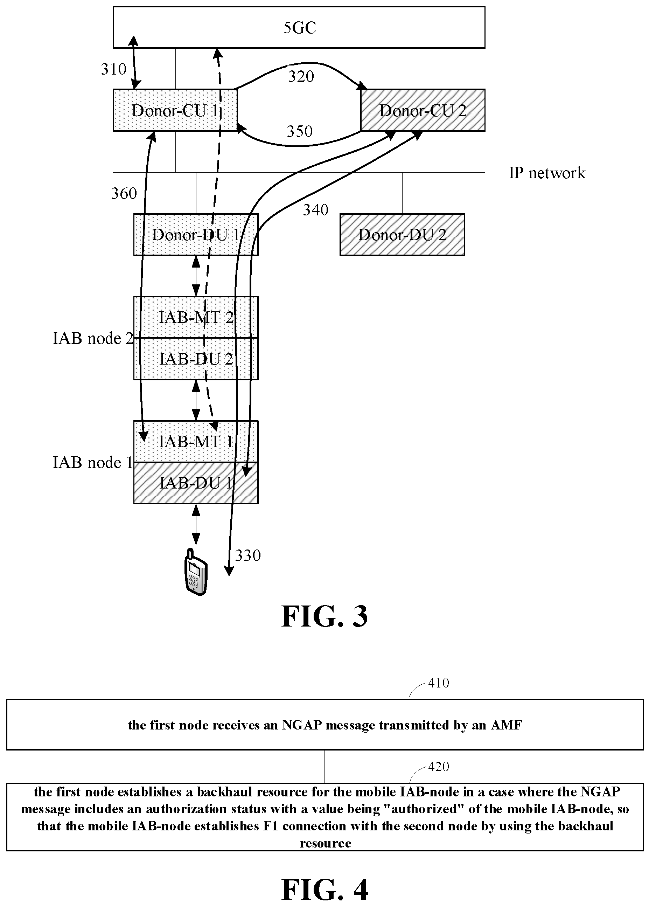

FIG. 3 is a schematic diagram of another example of an IAB network topology structure, illustrating an operational process after an authorization status of a mobile IAB-node is updated to "not authorized". In an example of FIG. 3, IAB node 1 is a mobile IAB-node, an RRC-terminating node (RRC-terminating donor-CU) thereof is donor-CU1, called a first node, and an F1-terminating node (F1-terminating donor-CU) thereof is donor-CU2, called a second node. As shown in FIG. 3, when an authorization status of the mobile IAB-node is changed to "not authorized", the process includes:
310: an AMF of a core network (5GC) notifies the first node of a new authorization status (i.e., "not authorized") via a DOWNLINK NAS TRANSPORT message;
320: the first node transmits an IAB TRANSPORT MIGRATION MODIFICATION REQUEST message to the second node, the message containing an updated authorization status of the mobile IAB-node;
330: the second node hands over all UEs served by the mobile IAB-node to other cells;
340: the second node releases an F1 interface towards an mIAB-DU of the mobile IAB-node via an F1 removal procedure;
350: the second node transmits an IAB TRANSPORT MIGRATION MODIFICATION RESPONSE message to the first node; and
360: the first node releases all traffic offloaded (from a topology of an F1-terminating donor-CU for a mobile IAB-node), and releases all backhaul resources of the mobile IAB-node, including a BAP address, a Transport Network Layer (TNL) address, a BH RLC channel configuration, and a default BAP configuration, etc. of the mobile IAB-node. In addition, the first node may further release a UE XnAP ID assigned for the mobile IAB-node (mIAB-MT).

In the above examples, no restrictions are imposed on an execution timing of operation 350. For example, operation 350 may be executed after operation 340, or may be executed simultaneously with operation 340, or may be executed before operation 340, etc.

In the above examples, operations 310 and 320 are the same as the operations 200 and 205, and contents thereof are incorporated herein.

In the above examples, operation 350 is to determine that an IAB TRANSPORT MIGRATION MODIFICATION REQUEST from an RRC-terminating donor-CU (the first node) is received, and to notify the first node that all UEs served by the mobile IAB-node have been handed over and that the F1 interface towards the mIAB-DU of the mobile IAB-node has been released, so that the first node may perform subsequent actions.

In operation 350, IAB TRANSPORT MIGRATION MODIFICATION RESPONSE is XnAP signaling. As described above, the message may not include the first IE, to implicitly indicate that the second node has completed handover of a terminal equipment served by an unauthorized mobile IAB-node and/or release of an F1 interface towards an unauthorized mobile IAB-node; or, the message may further include the first IE to explicitly indicate that the second node has completed handover of a terminal equipment served by an unauthorized mobile IAB-node and/or release of an F1 interface towards an unauthorized mobile IAB-node. Thus, XnAP protocol TS 38.423 is enhanced to support the notification.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to methods in embodiments of the present disclosure, a problem where an authorization status of a mobile IAB-node changes is solved to a certain extent, thereby supporting configuration flexibility of a mobile IAB-node, supporting movement of a mobile IAB-node over wide areas, and being able to provide high-quality services for a UE served by a mobile IAB-node.

### Embodiments of a Second Aspect

Embodiments of the present disclosure provide a method for updating an authorization status of a mobile IAB-node, which is described from a side of a first node, the first node being a non-F1-terminating node of the mobile IAB-node, an F1-terminating node of the mobile IAB-node is called a second node. By taking that the mobile IAB-node node is IAB-node 1 in a scenario shown in FIG. 1 as an example, the first node is Donor-CU1 in a scenario shown in FIG. 1, called CU1 for short, and the second node is Donor-CU2 in a scenario shown in FIG. 1, called as CU2 for short.

FIG. 4 is a schematic diagram of the method for updating an authorization status of a mobile IAB-node in embodiments of the present disclosure. As shown in FIG. 4, the method includes:
410: the first node receives an NGAP message transmitted by an AMF;
420: the first node establishes a backhaul resource for the mobile IAB-node in a case where the NGAP message includes an authorization status with a value being "authorized" of the mobile IAB-node, so that the mobile IAB-node establishes F1 connection with the second node by using the backhaul resource.

It is worth noting that before operation 420, the mobile IAB-node may not have established an F1 connection with the second node. That is, before operation 420, the second node is not yet the F1-terminating IAB-donor of the mobile IAB-node, and is only about to become the F1-terminating IAB-donor of the mobile IAB-node.

It is worth noting that the above FIG. 4 only schematically describes embodiments of the present disclosure, however the present disclosure is not limited thereto. For example, an execution sequence of operations may be adjusted appropriately, moreover some other operations may be added or certain operations therein may be reduced. Persons skilled in the art may make appropriate modifications according to the above contents, not being limited to records in the above FIG. 4.

According to the above embodiments, when the authorization status of the mobile IAB-node is changed from "not authorized" to "authorized", in a case where an F1 interface towards a mobile IAB-node has been released or has not been established, an IAB-donor (i.e., the first node) of the mobile IAB-node, after receiving the NGAP message, establishes a backhaul resource for the mobile IAB-node, thereby the mobile IAB-node may use the backhaul resource to establish an F1 connection with the second node, thus may serve UEs correctly.

In the above embodiments, the NGAP message is a message transferred on a NGAP interface. In a scenario of FIG. 2, an interface between a 5G core network (5GC) and donor-CU1 or donor-CU2 is a NG interface, and a control message transferred therebetween are called a NGAP message.

In some embodiments, the NGAP message is at least one of the following: a UE Context Modification Request message, an Initial Context Setup Request message, or a DOWNLINK NAS TRANSPORT message.

In the above embodiments, when the UE Context Modification Request message, the Initial Context Setup Request message, or the DOWNLINK NAS TRANSPORT message contains an IAB authorization status with a value being "authorized", the first node (NG-RAN node, i.e., an RRC-terminating IAB-donor of an mIAB-MT) establishes a backhaul resource (if not yet configured) for the mobile IAB-node.

In some embodiments, the backhaul resource may include at least one of the following: a TNL address, a BAP address, a default uplink BAP routing identity, or a default uplink BH RLC channel identity, etc.

In the above embodiments, the mobile IAB-node (IAB-DU) may initiate TNL establishment and F1 setup (if not yet established) to a second node (F1-terminating IAB-donor-CU) by using a default BAP routing identity and a default BH RLC channel identity for upstream traffic, configured by the first node (RRC-terminating IAB-donor-CU). Determination of the second node and relevant configuration are configured by an OAM for the mobile IAB-node. For details, relevant technologies are referred to.

In the above embodiment, the default BAP routing identity and the default BH RLC channel identity for upstream traffic are default uplink mapping configurations, and are also default BAP configurations.

In some embodiments, the first node and the second node are the same, i.e., an RRC-terminating IAB-donor and an F1-terminating IAB-donor of the mobile IAB-node are the same node.

In some embodiments, if there exists a second node different from the first node, and the second node is an F1-terminating node of the mobile IAB-node, i.e., the mobile IAB-node has already established an F1 interface with the second node, the first node may transmit an IAB TRANSPORT MIGRATION MODIFICATION REQUEST message containing an updated authorization status of the mobile IAB-node to the second node, so that the second node performs corresponding operations, such that the mobile IAB-node may serve a terminal equipment.

In the above embodiments, a scenario, in which an F1 interface towards the mobile IAB-node (mIAB-DU) is still present, i.e., one F1-terminating IAB-donor is present, is regarded. This scenario is for a situation where a message indicating that an authorization status of that mobile IAB-node changes is received before release of an F1 interface has not completed, or a situation where an F1 interface is not released when an authorization status of the mobile IAB-node is "not authorized".

In the above embodiments, if the UE Context Modification Request message, the Initial Context Setup Request message, or the DOWNLINK NAS TRANSPORT message contains an IAB authorization status with a value being "authorized", and there is a different F1-terminating IAB-donor, a NG-RAN node (i.e., an RRC-terminating IAB-donor of an mIAB-MT, also i.e., the first node) that receives the NGAP message transmits an IAB TRANSPORT MIGRATION MODIFICATION REQUEST message containing an updated authorization status of the mobile IAB-node to an F1-terminating IAB-donor-CU (the second node).

In the above embodiments, the first node (NG-RAN node) may establish a backhaul resource for the mobile IAB-node. The second node (F1-terminating IAB-donor-CU) may save an authorization status of the mobile IAB-node and perform corresponding operations, such that the mobile IAB-node may continue serving UEs.

In the above embodiments, the backhaul resource may include at least one of the following: a TNL address, a BAP address, a default uplink BAP routing identity, or a default uplink BH RLC channel identity, etc.

In the above embodiments, the corresponding operations performed by the second node refer to operations performed according to a current situation, for example if handover of all UEs served by the mobile IAB-node has not been completed, handover may be stopped, and if an F1 interface towards an mIAB-DU has not been released, the F1 interface may not be released, etc.

In the above embodiments, a criterion for the first node (NG-RAN node) to determine that a different F1-terminating IAB-donor is present is that: a UE association regarding the mobile IAB-node with another NG-RAN node is present, for example whether a UE XnAP ID has been generated for an mIAB-MT of the mobile IAB-node and has not been released. The criterion may further be that: if a backhaul resource is configured for the mobile IAB-node and is not released, and the NG-RAN node (the first node) does not terminate an F1 interface towards a mobile IAB-node.

In some embodiments, a first node may further generate a SIB1 broadcast message, the SIB1 broadcast message including cell identity information, and the SIB1 broadcast message including a mobileIAB-Support field and a gNB-ID-Length field, the gNB-ID-Length field being optional.

In the above embodiments, the SIB1 message generated by the first node may be broadcast via a parent node cell of the mobile IAB-node (i.e., a cell belonging to a parent node DU). The parent node may be an IAB-node, or may be the first node itself.

In the above embodiments, the gNB-ID-Length field is used for the mobile IAB-node to obtain a base station identity from the cell identity information, so as to perform DU migration.

In the above embodiment, during a DU (mIAB-DU) migration process of the mobile IAB-node, when a target logical mIAB-DU transmits an F1 setup request message to a target IAB-donor-CU, information related to an RRC-terminating IAB-donor of the mobile IAB-node needs to be included, such as a base station identity (gNB ID) of an RRC-terminating IAB-donor-CU. The base station identity is obtained by a collocated mIAB-MT through receiving a cell identity (e.g., NCGI, NR Cell Global Identifier, or CellIdentity in NCGI) in a System Information Block (SIB1) broadcast message of a parent node cell, since the cell identity contains a base station identity of a donor-CU to which a cell belongs. In order to decode a base station identity in the cell identity, the mobile IAB-node needs to know the number of bits of the base station identity, i.e., a bit length in the cell identity. The SIB1 broadcast message contains an optional field gNB-ID-Length, indicating a length of a gNB ID in the 36-bit cellIdentity.

To support DU migration of the mobile IAB-node, the parent node cell of the mobile IAB-node needs to ensure that the mobile IAB-node is able to receive gNB-ID-Length broadcast information. During a cell selection process of the mobile IAB-node (IAB-MT), it is needed to select a cell that broadcasts "support for a mobile IAB", i.e., select this cell as a parent node cell. Therefore, a broadcast message (SIB1 broadcast message) for indicating "support for a mobile IAB" may be enhanced, that is, when a mobileIAB-Support field in the SIB1 broadcast message is present, a gNB-ID-Length field in the SIB1 broadcast message must also be present. Thus, it is able to ensure that the mobile IAB-node is able to obtain the base station identity.

In the above embodiments, the mobileIAB-Support field and the gNB-ID-Length field may be included in PLMN identity information (*PLMN-IdentityInfo*) and/or NPN identity information list (*NPN-IdentityInfoList*) in a cell access related information (*CellAccessRelatedInfo*) IE in the SIB1 broadcast message. The present disclosure is not limited thereto.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to methods in embodiments of the present disclosure, a problem where an authorization status of a mobile IAB-node changes is solved to a certain extent, thereby supporting configuration flexibility of a mobile IAB-node, supporting movement of a mobile IAB-node over wide areas, and being able to provide high-quality services for a UE served by a mobile IAB-node.

### Embodiments of a Third Aspect

Embodiments of the present disclosure provide a method for updating an authorization status of a mobile IAB-node, which is described from a side of the mobile IAB-node, the mobile IAB-node is, for example, IAB node 1 in a scenario shown in FIG. 1, a non-F1-terminating node of the mobile IAB-node is called a first node, e.g., Donor-CU1 in a scenario shown in FIG. 1, called CU1 for short, and an F1-terminating node of the mobile IAB-node is called a second node, e.g., Donor-CU2 in a scenario shown in FIG. 1, called as CU2 for short.

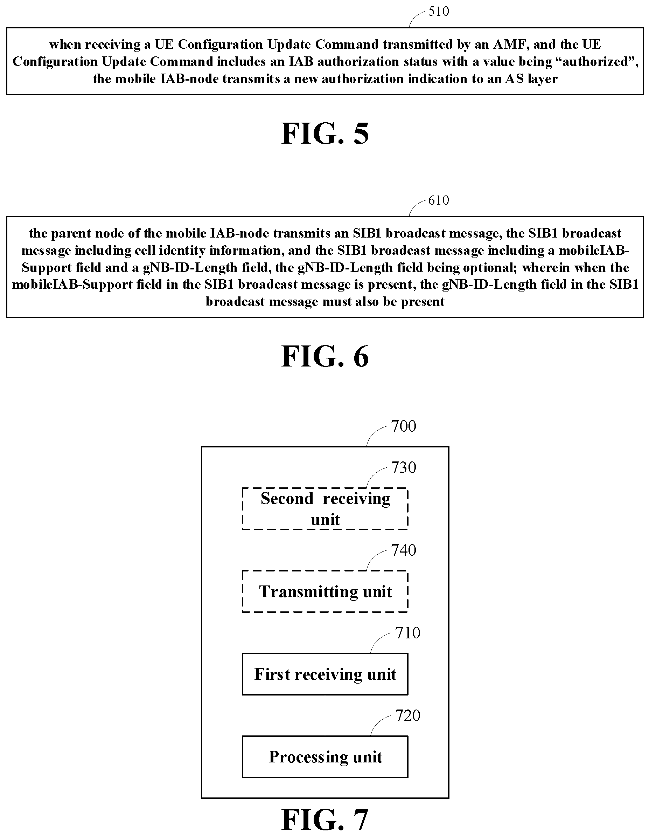

FIG. 5 is a schematic diagram of the method for updating an authorization status of a mobile IAB-node in embodiments of the present disclosure. As shown in FIG. 5, the method includes:
510: when receiving a UE Configuration Update Command transmitted by an AMF, and the UE Configuration Update Command includes an IAB authorization status with a value being "authorized", the mobile IAB-node transmits a new authorization indication to an AS layer.

In the above embodiments, the AMF provides the new authorization indication and more information to the mobile IAB-node (mIAB-MT). When the UE Configuration Update Command received by the mobile IAB-node includes an IAB authorization status with a value being "authorized", the mobile IAB-node (mIAB-MT) provides the new authorization indication to the AS layer. Thus, the mobile IAB-node is able to serve UEs correctly.

In some embodiments, if a backhaul resource of the mobile IAB-node has been configured, for example is configured by RRC, a DU (an mIAB-DU collocated with the mIAB-MT) of the mobile IAB-node may perform an F1 setup procedure with a donor-CU (the second node) based on OAM configuration. Thus, an F1 interface is set up with the second node.

In some embodiments, if the backhaul resource of the mobile IAB-node is not configured, the DU (an mIAB-DU collocated with the mIAB-MT) of the mobile IAB-node may wait for RRC to configure a backhaul resource for the mIAB-MT, and after a backhaul resource is reconfigured, perform an F1 setup procedure with the second node.

In the above embodiments, the backhaul resource may include, for example, a TNL address, a BAP address, and default uplink mapping, etc., which have been described in detail above and will not be repeated here.

In some embodiments, when receiving a DEREGISTRATION REQUEST message transmitted by the AMF, the mobile IAB-node performs a deregistration procedure when a deregistration condition is satisfied.

In the above embodiments, the deregistration condition may be, for example, that an F1 connection of the DU of the mobile IAB-node is released; or that the backhaul resource of the mobile IAB-node is released, etc.

In the above embodiments, if the authorization status of the mobile IAB-node is changed from "authorized" to "not authorized", and the AMF uses a deregistration procedure to update the mobile IAB-node, the AMF transmits a UE Context Modification message to a NG-RAN (the first node) before triggering the deregistration procedure for the mobile IAB-node and waits for a period of time (e.g., a timer configured based on the AMF expires) before triggering the deregistration procedure.

Since the mobile IAB-node is unable to serve UEs after being deregistered, even if the deregistration procedure is triggered after a period of time, it is still unable to ensure that all UEs served by the mobile IAB-node have been handed over. To avoid premature deregistration of the mobile IAB-node (mIAB-MT), in the above embodiments, when receiving a deregistration request message from the AMF, the mIAB-MT of the mobile IAB-node performs the deregistration procedure after an F1 connection of the collocated mIAB-DU is released. As a deregistration condition, the release of the F1 connection of the collocated mIAB-DU is to ensure that the UE(s) served by the mIAB-DU completes handover. Similarly, the deregistration condition may further be that the backhaul resource of the mIAB is released, which is completed by RRC reconfiguration for the mIAB-MT.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to methods in embodiments of the present disclosure, a problem where an authorization status of a mobile IAB-node changes is solved to a certain extent, thereby supporting configuration flexibility of a mobile IAB-node, supporting movement of a mobile IAB-node over wide areas, and being able to provide high-quality services for a UE served by a mobile IAB-node.

### Embodiments of a Fourth Aspect

Embodiments of the present application provide a method for supporting broadcast message of a mobile IAB-node, which is described from a side of a parent node of the mobile IAB-node. The mobile IAB-node is, for example, IAB node 1 in a scenario shown in FIG. 1, and the parent node of the mobile IAB-node is, for example, IAB node 2 in a scenario shown in FIG. 1, or may be IAB-donor 1 (including donor-CU1 and donor-DU1) in a scenario shown in FIG. 1, i.e., the first node in the preceding embodiments.

FIG. 6 is a schematic diagram of the method for supporting a broadcast message of a mobile IAB-node in embodiments of the present disclosure. As shown in FIG. 6, the method includes:
610: the parent node of the mobile IAB-node transmits a SIB1 broadcast message, the SIB1 broadcast message including cell identity information, and the SIB1 broadcast message including a mobileIAB-Support field and a gNB-ID-Length field, the gNB-ID-Length field being optional; wherein when the mobileIAB-Support field in the SIB1 broadcast message is present, the gNB-ID-Length field in the SIB1 broadcast message must also be present.

In the above embodiments, the gNB-ID-Length field is used for the mobile IAB-node to obtain a base station identity from the cell identity information, so as to perform DU migration.

In the above embodiment, during migration of the DU of the mobile IAB-node (mIAB-DU), when a target logical mIAB-DU transmits an F1 setup request message to a target IAB-donor-CU, information related to an RRC-terminating IAB-donor of the mobile IAB-node needs to be included, such as a base station identity (gNB ID) of the RRC-terminating IAB-donor-CU. The base station identity is obtained by a collocated mIAB-MT through receiving cell identities (NCGI, NR Cell Global Identifier) in a System Information Block (SIB1) broadcast message of a parent node cell, because NCGI contains the base station identity of a donor-CU to which the cell belongs. In order to decode the base station identity in the NCGI, the mobile IAB-node needs to know the number of bits of the base station identity, i.e., a bit length in the NCGI. the SIB1 broadcast message contains an optional field gNB-ID-Length, indicating the length of the gNB ID in the 36-bit cellIdentity.

To support DU migration of the mobile IAB-node, the first node needs to ensure, via a parent node cell of the mobile IAB-node, that the mobile IAB-node is able to receive gNB-ID-Length broadcast information. During a cell selection process of the mobile IAB-node (IAB-MT), it is needed to select a cell that broadcasts "support for a mobile IAB", i.e., select this cell as a parent node cell. Therefore, a broadcast message (SIB1 broadcast message) for indicating "support for a mobile IAB" may be enhanced, that is, when the mobileIAB-Support field in the SIB1 broadcast message is present, the gNB-ID-Length field in the SIB1 broadcast message must also be present. Thus, it is able to ensure that the mobile IAB-node is able to obtain the base station identity.

In the above embodiments, the mobileIAB-Support field and the gNB-ID-Length field may be included in PLMN identity information (*PLMN-IdentityInfo*) and/or NPN identity information list (*NPN-IdentityInfoList*) in a cell access related information (*CellAccessRelatedInfo*) IE in the SIB1 broadcast message. The present disclosure is not limited thereto.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to methods in embodiments of the present disclosure, a problem where an authorization status of a mobile IAB-node changes is solved to a certain extent, thereby supporting configuration flexibility of a mobile IAB-node, supporting movement of a mobile IAB-node over wide areas, and being able to provide high-quality services for a UE served by a mobile IAB-node.

### Embodiments of a Fifth Aspect

Embodiments of the present disclosure provide an apparatus for updating an authorization status of a mobile IAB-node.

FIG. 7 is a schematic diagram of the apparatus for updating an authorization status of a mobile IAB-node in embodiments of the present disclosure. The apparatus may be the first node, or may be one or some components or assemblies in the first node. A principle for solving problems is the same as that in embodiments of the first aspect, and the same contents are not further repeated.

As shown in FIG. 7, the apparatus 700 includes:
a first receiving unit 710 configured to receive an XnAP message transmitted by a second node;
a processing unit 720 configured to determine, according to the XnAP message, whether the second node has completed handover of a terminal equipment served by an unauthorized mobile IAB-node and/or release of an F1 interface towards an unauthorized mobile IAB-node.

In some embodiments, the XnAP message is an IAB TRANSPORT MIGRATION MODIFICATION RESPONSE message, the IAB TRANSPORT MIGRATION MODIFICATION RESPONSE message being a reply message for an IAB TRANSPORT MIGRATION MODIFICATION REQUEST message transmitted by the first node to the second node, the IAB TRANSPORT MIGRATION MODIFICATION REQUEST message including IE *Mobile IAB Authorization Status*, a value of the IE being "not authorized".

According to the above embodiments, the second node performs implicit notification via an IAB TRANSPORT MIGRATION MODIFICATION RESPONSE message. When receiving the IAB TRANSPORT MIGRATION MODIFICATION RESPONSE message, the processing unit 720 confirms that the second node has completed handover of a terminal equipment served by an unauthorized mobile IAB-node and/or release of an F1 interface towards an unauthorized mobile IAB-node, thereby the processing unit 720 may perform subsequent actions.

In some other embodiments, the XnAP message is an IAB TRANSPORT MIGRATION MODIFICATION RESPONSE message, the IAB TRANSPORT MIGRATION MODIFICATION RESPONSE message including a first IE, the first IE indicating that it is confirmed that an authorization status of the mobile IAB-node being changed to "not authorized" is received, and the first IE indicating that handover of a terminal equipment served by the unauthorized mobile IAB-node and/or release of an F1 interface towards the unauthorized mobile IAB-node has/have been completed.

According to the above embodiments, the second node performs explicit notification via an IAB TRANSPORT MIGRATION MODIFICATION RESPONSE message. When a received IAB TRANSPORT MIGRATION MODIFICATION RESPONSE message includes the first IE, the processing unit 720 confirms that the second node has completed handover of a terminal equipment served by an unauthorized mobile IAB-node and/or release of an F1 interface towards an unauthorized mobile IAB-node, thereby the processing unit 720 may perform subsequent actions.

In some further embodiments, the XnAP message is an IAB TRANSPORT MIGRATION MANAGEMENT REQUEST message, the IAB TRANSPORT MIGRATION MANAGEMENT REQUEST message including a second IE, the second IE indicating that handover of a terminal equipment served by the unauthorized mobile IAB-node and/or release of an F1 interface towards the unauthorized mobile IAB-node has/have been completed.

According to the above embodiments, the second node performs notification via a spontaneous procedure (IAB TRANSPORT MIGRATION MANAGEMENT REQUEST message). When a received IAB TRANSPORT MIGRATION MANAGEMENT REQUEST message includes the second IE, the processing unit 720 confirms that the second node has completed handover of a terminal equipment served by an unauthorized mobile IAB-node and/or release of an F1 interface towards an unauthorized mobile IAB-node, thereby the processing unit 720 may perform subsequent actions.

In the above embodiments, optionally, the second IE may be included in a *Traffic To Be Released Information* IE group, or in a *Full Release* IE under the *Traffic To Be Released Information* IE group.

In the above embodiments, optionally, when the second IE is present, All *traffic indication* IE is set to "true".

In some further embodiments, the XnAP message is a message in a class 2 procedure initiated by the second node, the message including a third IE, the third IE indicating that handover of a terminal equipment served by the unauthorized mobile IAB-node and/or release of an F1 interface towards the unauthorized mobile IAB-node has/have been completed.

According to the above embodiments, the second node performs notification via a class 2 procedure (one-way message procedure). When a received message in the class 2 procedure includes the third IE, the processing unit 720 confirms that the second node has completed handover of a terminal equipment served by an unauthorized mobile IAB-node and/or release of an F1 interface towards an unauthorized mobile IAB-node, thereby the processing unit 720 may perform subsequent actions.

In some further embodiments, the XnAP message is a message in a non-UE-associated procedure initiated by the second node, the message including a fourth IE, the fourth IE indicating that handover of a terminal equipment served by the unauthorized mobile IAB-node and/or release of an F1 interface towards the unauthorized mobile IAB-node has/have been completed.

According to the above embodiments, the second node performs notification via a non-UE-associated procedure. When a received message in the non-UE-associated procedure includes the fourth IE, the processing unit 720 confirms that the second node has completed handover of a terminal equipment served by an unauthorized mobile IAB-node and/or release of an F1 interface towards an unauthorized mobile IAB-node, thereby the processing unit 720 may perform subsequent actions.

In the above embodiments, optionally, the message is a new message in the non-UE associated procedure, or is an NG-RAN NODE CONFIGURATION UPDATE message in the non-UE associated procedure.

In the above embodiments, optionally, the message further includes an identity / identities of one or more mobile IAB-nodes.

In some embodiments, that the processing unit 720 performs subsequent actions comprises that:
the processing unit 720 releases all traffics offloaded from a topology of the second node for the unauthorized mobile IAB-node and/or releases a backhaul resource of the unauthorized mobile IAB-node.

In the above embodiments, the processing unit 720 may further release a UE XnAP ID assigned for the mobile IAB-node (mIAB-MT).

In some embodiments, that the processing unit 720 performs subsequent actions comprises that:
the processing unit 720 does not release the backhaul resource of the unauthorized mobile IAB-node, or,
the processing unit 720 releases the backhaul resource of the unauthorized mobile IAB-node when a first timer expires, wherein the first timer is started when a status of the mobile IAB-node is changed to "not authorized".

In some embodiments, as shown in FIG. 7, the apparatus 700 further includes:
a second receiving unit 730 configured to receive a new authorization status of the mobile IAB-node transmitted by an AMF via a DOWNLINK NAS TRANSPORT message, the new authorization status being "not authorized".

In the above embodiments, as shown in FIG. 7, the apparatus 700 further includes:
a transmitting unit 740 configured to transmit an IAB TRANSPORT MIGRATION MODIFICATION REQUEST message to the second node, the IAB TRANSPORT MIGRATION MODIFICATION REQUEST message indicating an updated authorization status of the mobile IAB-node.

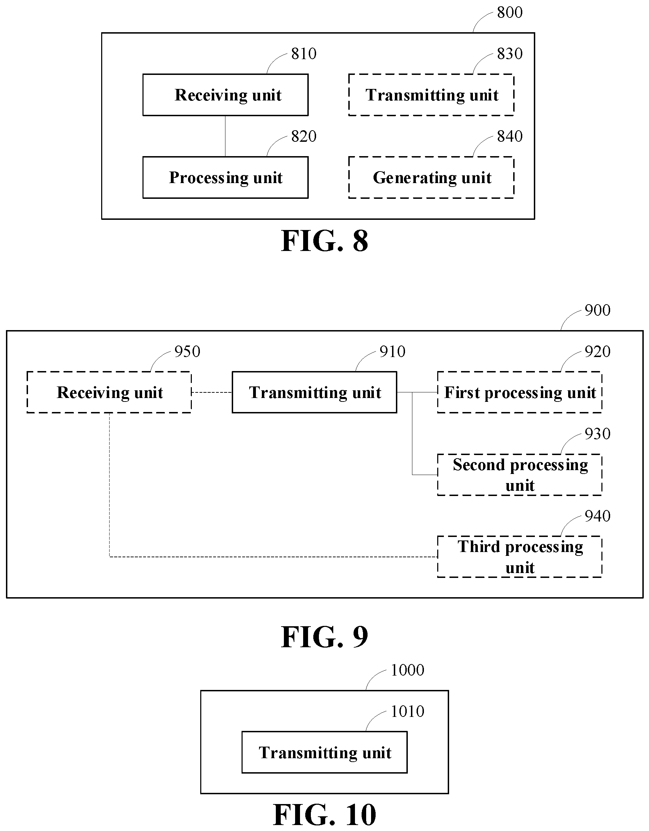

FIG. 8 is another schematic diagram of the apparatus for updating an authorization status of a mobile IAB-node in embodiments of the present disclosure. The apparatus may be the first node, or may be one or some components or assemblies in the first node. A principle for solving problems is the same as that in embodiments of the second aspect, and the same contents are not further repeated.

As shown in FIG. 8, the apparatus 800 includes:
a receiving unit 810 configured to receive an NGAP message transmitted by an AMF; and
a processing unit 820 configured to establish a backhaul resource for a mobile IAB-node in a case where the NGAP message includes an authorization status with a value being "authorized" of the mobile IAB-node, so that the mobile IAB-node establishes F1 connection with a second node by using the backhaul resource.

In some embodiments, the NGAP message is at least one of the following: a UE Context Modification Request message, an Initial Context Setup Request message, or a DOWNLINK NAS TRANSPORT message.

In some embodiments, the backhaul resource includes at least one of the following:
a TNL address;
a BAP address;
a default uplink BAP routing identity; or
a default uplink BH RLC channel identity.

In some embodiments, as shown in FIG. 8, the apparatus 800 further includes:
a transmitting unit 830 configured to transmit an IAB TRANSPORT MIGRATION MODIFICATION REQUEST message including an updated authorization status of the mobile IAB-node to the second node in a case where the second node exists and the second node is an F1-terminating IAB-donor of the mobile IAB-node, so that the second node performs corresponding operations to enable the mobile IAB-node to serve a terminal equipment.

In some embodiments, as shown in FIG. 8, the apparatus 800 further includes:
a generating unit 840 configured to generate an SIB1 broadcast message, the SIB1 broadcast message including cell identity information, and the SIB1 broadcast message including a mobileIAB-Support field and a gNB-ID-Length field, the gNB-ID-Length field being optional; wherein when the mobileIAB-Support field in the SIB1 broadcast message is present, the gNB-ID-Length field in the SIB1 broadcast message must also be present.

In the above embodiments, optionally, the mobileIAB-Support field and the gNB-ID-Length field are included in PLMN identity information and/or NPN identity information list in a cell access related information IE in the SIB1 broadcast message.

In the above embodiments, optionally, the gNB-ID-Length field is used for the mobile IAB-node to obtain a base station identity from the cell identity information, so as to perform DU migration.

FIG. 9 is another schematic diagram of the apparatus for updating an authorization status of a mobile IAB-node in embodiments of the present disclosure. The apparatus may be the mobile IAB-node, or may be one or some components or assemblies in the mobile IAB-node. A principle for solving problems is the same as that in embodiments of the third aspect, and the same contents are not further repeated.

As shown in FIG. 9, the apparatus 900 includes:
a transmitting unit 910 configured to transmit a new authorization indication to an AS layer when a mobile IAB-node receives a UE Configuration Update Command transmitted by an AMF and the UE Configuration Update Command includes an IAB authorization status with a value being "authorized".

In some embodiments, as shown in FIG. 9, the apparatus 900 further includes:
a first processing unit 920 (a DU of a mobile IAB-node) configured to perform an F1 setup procedure with a second node if a backhaul resource of the mobile IAB-node has been configured.

In some embodiments, as shown in FIG. 9, the apparatus 900 further includes:
a second processing unit 930 (a DU of a mobile IAB-node) configured to, if the backhaul resource of the mobile IAB-node is not configured, perform an F1 setup procedure with a second node after the backhaul resource is reconfigured.

In some embodiments, as shown in FIG. 9, the apparatus 900 further includes:
a third processing unit 940 configured to, when the mobile IAB-node receives a DEREGISTRATION REQUEST message transmitted by the AMF, execute a deregistration procedure in a case where a deregistration condition is satisfied.

In the above embodiments, optionally, the deregistration condition includes at least one of the following:
F1 connection of a DU of the mobile IAB-node is released; or
a backhaul resource of the mobile IAB-node is released.

In some embodiments, as shown in FIG. 9, the apparatus 900 further includes:
a receiving unit 950 configured to receive the UE Configuration Update Command and/or DEREGISTRATION REQUEST message.

Embodiments of the present disclosure further provide an apparatus for supporting a broadcast message of a mobile IAB-node.

FIG. 10 is a schematic diagram of the apparatus for supporting a broadcast message of a mobile IAB-node in embodiments of the present disclosure. The apparatus may be a parent node of the mobile IAB-node, for example also an IAB-node or an IAB-donor node, etc., or may be one or some components or assemblies in the parent node of the mobile IAB-node. A principle for solving problems is the same as that in embodiments of the fourth aspect, and the same contents are not further repeated.

As shown in FIG. 10, the apparatus 1000 includes:
a transmitting unit 1010 configured to transmit an SIB1 broadcast message, the SIB1 broadcast message including cell identity information, and the SIB1 broadcast message including a mobileIAB-Support field and a gNB-ID-Length field, the gNB-ID-Length field being optional; wherein when the mobileIAB-Support field in the SIB1 broadcast message is present, the gNB-ID-Length field in the SIB1 broadcast message must also be present.

In some embodiments, the mobileIAB-Support field and the gNB-ID-Length field are included in PLMN identity information and/or NPN identity information list in a cell access related information IE in the SIB1 broadcast message.

In some embodiments, the gNB-ID-Length field is used for the mobile IAB-node to obtain a base station identity from the cell identity information, so as to perform DU migration.

It is worth noting that the above text only describes components or modules related to the present disclosure, however the present disclosure is not limited thereto. Apparatuses 700-1000 in embodiments of the present disclosure may further include other components or modules. For specific contents of these components or modules, relevant technologies may be referred to.

Moreover, for the sake of simplicity, FIG. 7 to FIG. 10 only exemplarily show a connection relationship or signal direction between components or modules, however persons skilled in the art should know that various relevant technologies such as bus connection may be adopted. Each of the above components or modules may be implemented via a hardware facility such as a processor, a memory, a transmitter, a receiver, etc. Embodiments of the present disclosure do not impose limitations thereto.

According to apparatuses in embodiments of the present disclosure, a problem where an authorization status of a mobile IAB-node changes is solved to a certain extent, thereby supporting configuration flexibility of a mobile IAB-node, supporting movement of a mobile IAB-node over wide areas, and being able to provide high-quality services for a UE served by a mobile IAB-node.

### Embodiments of a Sixth Aspect

Embodiments of the present disclosure provide an IAB communication system, including an IAB-node and an IAB-donor node, the IAB-node including a mobile IAB-node, a non-F1-terminating node of the mobile IAB-node being configured to perform a method described in embodiments of the first aspect or the second aspect, the mobile IAB-node being configured to perform a method described in embodiments of the third aspect, and a parent node of the mobile IAB-node may be an IAB-node or an IAB-donor node, such as a non-F1-terminating node of the mobile IAB-node. Specific behaviors of the mobile IAB-node, the non-F1-terminating node of the mobile IAB-node (the first node in the foregoing embodiments), and the parent node of the mobile IAB-node have been described in detail in embodiments of the first to fifth aspects, contents of which are incorporated herein and are not repeated here.

Embodiments of the present disclosure further provide an IAB-donor node, the IAB-donor node may be the first node in the foregoing embodiments, i.e., the non-F1-terminating node of the mobile IAB-node, or may be the parent node of the mobile IAB-node in the foregoing embodiments, including a memory and a processor, the memory being configured to store a computer program, and the processor being configured to perform the computer program to implement a method described in embodiments of the first or second aspect.

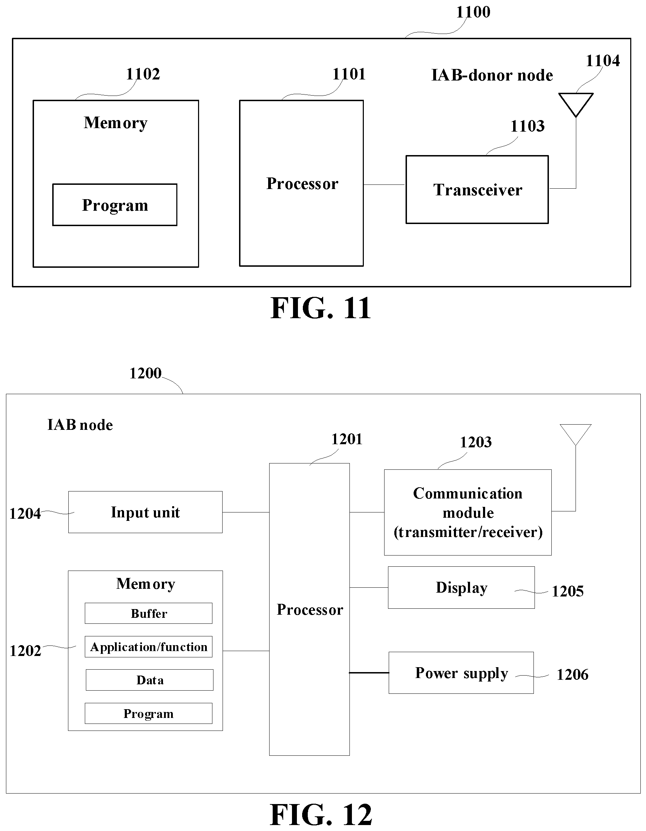

FIG. 11 is a schematic diagram of the IAB-donor node in embodiments of the present disclosure. As shown in FIG. 11, the IAB-donor node 1100 may include: a central processing unit (CPU) 1101, and a memory 1102 coupled to the central processing unit 1101. The memory 1102 may store various data; moreover, further stores a program for information processing, and executes the program under the control of a processor 1101, so as to receive various information transmitted by an IAB-node and transmit various information to an IAB-node.

For example, the processor 1101 may be configured to execute a program to implement the method described in embodiments of the first aspect or the second aspect.

In addition, as shown in FIG. 11, the IAB-donor node 1100 may further include: a transceiver 1103 and an antenna 1104, etc.; wherein functions of said components are similar to related arts and are not repeated here. It is worth noting that the IAB-donor node 1100 does not have to include all components shown in FIG. 11. Moreover, the IAB-donor node 1100 may further include components not shown in FIG. 11, related arts may be referred to.

Embodiments of the present disclosure further provide an IAB-node, the node being a mobile IAB-node or a parent node of a mobile IAB-node, including a memory and a processor, the memory being configured to store a computer program, and the processor being configured to perform the computer program to implement a method described in embodiments of the third aspect.

FIG. 12 is a schematic diagram of the IAB-node in embodiments of the present disclosure. As shown in FIG. 12, the IAB-node 1200 may include a processor 1201, and a memory 1202 configured to store data and programs and be coupled to the processor 1201. It is worth noting that this figure is exemplary, other types of structures may further be used to supplement or replace this structure, so as to implement a telecommunication function or other functions.

For example, the processor 1201 may be configured to execute a program to implement a method described in embodiments of the third or fourth aspect.

As shown in FIG. 12, the IAB-node 1200 may further include: a communication module 1203, an input unit 1204, a display 1205 and a power supply 1206. Functions of the above components are similar to related arts, and are not further elaborated here. It is worth noting that the IAB-node 1200 does not have to include all components shown in FIG. 12, said components are not indispensable. Moreover, the IAB-node 1200 may further include components not shown in FIG. 12, related arts may be referred to.

Embodiments of the present disclosure further provide a computer readable program, wherein when the program is executed in an IAB-donor node, the program enables a computer to execute a method described in embodiments of the first or second aspect, in the IAB-donor node.

Embodiments of the present disclosure further provide a storage medium in which a computer readable program is stored, wherein the computer readable program enables a computer to execute a method described in embodiments of the first or second aspect, in an IAB-donor node.

Embodiments of the present disclosure further provide a computer readable program, wherein when the program is executed in an IAB-node, the program enables a computer to execute a method described in embodiments of the third or fourth aspect, in the IAB-node.

Embodiments of the present disclosure further provide a storage medium in which a computer readable program is stored, wherein the computer readable program enables a computer to execute a method described in embodiments of the third or fourth aspect, in an IAB-node.

Apparatuses and methods in the present disclosure may be implemented by hardware, or may be implemented by combining hardware with software. Present disclosure relates to such a computer readable program that when the program is executed by a logic component, the logic component is able to implement the apparatuses described in the above text or a constituent component, or the logic component is able to implement various methods or steps described in the above text. Logic component is e.g. a field programmable logic component, a microprocessor, a processor used in a computer, etc. Present disclosure further relates to a storage medium storing said programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams as shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

Software module may be located in a RAM memory, a flash memory, a ROM memory, an EPROM memory, an EEPROM memory, a register, a hard disk, a mobile magnetic disk, a CD-ROM, or any other form of storage medium as known in the art. A storage medium may be coupled to a processor, thus enabling a processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

Present disclosure is described above by combining with specific implementations, however persons skilled in the art should clearly know that these descriptions are exemplary and do not limit a protection scope of the present disclosure. Persons skilled in the art may make various variations and amendments to the present disclosure according to spirits and principles of the present disclosure, these variations and amendments are also within a scope of the present disclosure.

Regarding the above implementations disclosed in this embodiment, the following supplements are further disclosed:
1. A method for updating an authorization status of a mobile IAB-node, wherein the method includes that:
   a first node receives an XnAP message transmitted by a second node; and
   the first node determines, according to the XnAP message, whether the second node has completed handover of a terminal equipment served by an unauthorized mobile IAB-node and/or release of an F1 interface towards an unauthorized mobile IAB-node.
2. The method according to supplement 1, wherein,
   the XnAP message is a message in a class 2 procedure initiated by the second node, the message including a third IE, the third IE indicating that handover of a terminal equipment served by the unauthorized mobile IAB-node and/or release of an F1 interface towards the unauthorized mobile IAB-node has/have been completed.
3. The method according to supplement 1, wherein,
   the XnAP message is a message in a non-UE-associated procedure initiated by the second node, the message including a fourth IE, the fourth IE indicating that handover of a terminal equipment served by the unauthorized mobile IAB-node and/or release of an F1 interface towards the unauthorized mobile IAB-node has/have been completed.
4. The method according to supplement 3, wherein,
   the message is an NG-RAN NODE CONFIGURATION UPDATE message.
5. A method for supporting a broadcast message of a mobile IAB-node, wherein the method includes that:
   a parent node of a mobile IAB-node transmits a SIB1 broadcast message, the SIB1 broadcast message including cell identity information, and the SIB1 broadcast message including a mobileIAB-Support field and a gNB-ID-Length field, the gNB-ID-Length field being optional;
   wherein when the mobileIAB-Support field in the SIB1 broadcast message is present, the gNB-ID-Length field in the SIB1 broadcast message must also be present.
6. The method according to supplement 5, wherein,
   the mobileIAB-Support field and the gNB-ID-Length field are included in PLMN identity information and/or NPN identity information list in a cell access related information IE in the SIB1 broadcast message.
7. The method according to supplement 6, wherein,
   the gNB-ID-Length field is used for the mobile IAB-node to obtain a base station identity from the cell identity information, so as to perform DU migration.
8. An IAB-donor node, including a memory and a processor, the memory being configured to store a computer program, and the processor being configured to execute the computer program to implement a method according to any one of the supplements 1 to 7.
9. An IAB-node, including a memory and a processor, the memory being configured to store a computer program, and the processor being configured to execute the computer program to implement a method according to any one of the supplements 5 to 7.
10. An IAB communication system, including an IAB-node and an IAB-donor node, the IAB-node being configured to execute a method according to any one of supplements 5 to 7, and/or, the IAB-donor node being configured to execute a method according to any one of supplements 1 to 7.

## Claims

1. An apparatus for updating an authorization status of a mobile IAB-node, configured in a first node, wherein the apparatus comprises:
a first receiving unit configured to receive an XnAP message transmitted by a second node; and
a processing unit configured to determine, according to the XnAP message, whether the second node has completed handover of a terminal equipment served by an unauthorized mobile IAB-node and/or release of an F1 interface towards an unauthorized mobile IAB-node.

2. The apparatus according to claim 1, wherein,
the XnAP message is an IAB TRANSPORT MIGRATION MODIFICATION RESPONSE message, the IAB TRANSPORT MIGRATION MODIFICATION RESPONSE message being a reply message for an IAB TRANSPORT MIGRATION MODIFICATION REQUEST message transmitted by the first node to the second node, the IAB TRANSPORT MIGRATION MODIFICATION REQUEST message including IE *Mobile IAB Authorization Status*, a value of the IE being "not authorized".

3. The apparatus according to claim 1, wherein,
the XnAP message is an IAB TRANSPORT MIGRATION MODIFICATION RESPONSE message, the IAB TRANSPORT MIGRATION MODIFICATION RESPONSE message including a first IE, the first IE indicating that it is confirmed that an authorization status of the mobile IAB-node being changed to "not authorized" is received, and the first IE indicating that handover of a terminal equipment served by the unauthorized mobile IAB-node and/or release of an F1 interface towards the unauthorized mobile IAB-node has/have been completed.

4. The apparatus according to claim 1, wherein,
the XnAP message is an IAB TRANSPORT MIGRATION MANAGEMENT REQUEST message, the IAB TRANSPORT MIGRATION MANAGEMENT REQUEST message including a second IE, the second IE indicating that handover of a terminal equipment served by the unauthorized mobile IAB-node and/or release of an F1 interface towards the unauthorized mobile IAB-node has/have been completed.

5. The apparatus according to claim 1, wherein,
the processing unit releases all traffics offloaded from a topology of the second node for the unauthorized mobile IAB-node and/or releases a backhaul resource of the unauthorized mobile IAB-node.

6. The apparatus according to claim 5, wherein the backhaul resource includes at least one of the following:
a TNL address;
a BAP address;
a default uplink BAP routing identity; or
a default uplink BH RLC channel identity.

7. The apparatus according to claim 1, wherein,
the processing unit releases a UE XnAP ID assigned to a MT of the mobile IAB-node.

8. The apparatus according to claim 1, wherein the apparatus further comprises:
a second receiving unit configured to receive a new authorization status of the mobile IAB-node transmitted by an AMF via a DOWNLINK NAS TRANSPORT message, the new authorization status being "not authorized".

9. The apparatus according to claim 8, wherein the apparatus further comprises:
a transmitting unit configured to transmit an IAB TRANSPORT MIGRATION MODIFICATION REQUEST message to the second node, the IAB TRANSPORT MIGRATION MODIFICATION REQUEST message indicating an updated authorization status of the mobile IAB-node.

10. The apparatus according to claim 1, wherein,
the processing unit does not release a backhaul resource of the unauthorized mobile IAB-node, or,
the processing unit releases a backhaul resource of the unauthorized mobile IAB-node when a first timer expires, wherein the first timer is started when a status of the mobile IAB-node is changed to "not authorized".

11. An apparatus for updating an authorization status of a mobile IAB-node, configured in a first node, wherein the apparatus comprises:
a receiving unit configured to receive an NGAP message transmitted by an AMF; and
a processing unit configured to establish a backhaul resource for a mobile IAB-node in a case where the NGAP message includes an authorization status with a value being "authorized" of the mobile IAB-node, so that the mobile IAB-node establishes a F1 connection with a second node by using the backhaul resource.

12. The apparatus according to claim 11, wherein,
the NGAP message is at least one of the following: a UE Context Modification Request message, an Initial Context Setup Request message, or a DOWNLINK NAS TRANSPORT message.

13. The apparatus according to claim 11, wherein the backhaul resource includes at least one of the following:
a TNL address;
a BAP address;
a default uplink BAP routing identity; or
a default uplink BH RLC channel identity.

14. The apparatus according to claim 11, wherein the apparatus further comprises:
a transmitting unit configured to transmit an IAB TRANSPORT MIGRATION MODIFICATION REQUEST message including an updated authorization status of the mobile IAB-node to the second node in a case where the second node exists and the second node is an F1-terminating IAB-donor of the mobile IAB-node, so that the second node performs corresponding operations to enable the mobile IAB-node to serve a terminal equipment.

15. The apparatus according to claim 11, wherein the apparatus further comprises:
a generating unit configured to generate an SIB1 broadcast message, the SIB1 broadcast message including cell identity information, and the SIB1 broadcast message including a mobileIAB-Support field and a gNB-ID-Length field, the gNB-ID-Length field being optional;
wherein when the mobileIAB-Support field in the SIB1 broadcast message is present, the gNB-ID-Length field in the SIB1 broadcast message must also be present.

16. An apparatus for updating an authorization status of a mobile IAB-node, configured in a mobile IAB-node, wherein the apparatus comprises:
a transmitting unit configured to transmit a new authorization indication to an AS layer when the mobile IAB-node receives a UE Configuration Update Command transmitted by an AMF and the UE Configuration Update Command includes an IAB authorization status with a value being "authorized".

17. The apparatus according to claim 16, wherein the apparatus further comprises:
a first processing unit configured to perform an F1 setup procedure with a second node if a backhaul resource of the mobile IAB-node has been configured.

18. The apparatus according to claim 16, wherein the apparatus further comprises:
a second processing unit configured to, if a backhaul resource of the mobile IAB-node is not configured, perform an F1 setup procedure with a second node after the backhaul resource is reconfigured.

19. The apparatus according to claim 16, wherein the apparatus further comprises:
a third processing unit configured to, when the mobile IAB-node receives a DEREGISTRATION REQUEST message transmitted by the AMF, execute a deregistration procedure in a case where a deregistration condition is satisfied.

20. The apparatus according to claim 19, wherein the deregistration condition includes at least one of the following that:
a F1 connection of a DU of the mobile IAB-node is released; or
a backhaul resource of the mobile IAB-node is released.
